# EUROPÄISCHE PATENTSCHRIFT

(11) **EP 0 869 192 B1**
(45) Veröffentlichungstag und Bekanntmachung des Hinweises auf die Patenterteilung: **29.08.2001**
(21) Anmeldenummer: 98105905.8
(22) Anmeldetag: 01.04.1998
(51) Int. Cl.: C22B 1/00, C22B 7/00, F27B 9/26, F27B 9/00

(54) **Verfahren zur Schmelzabtrennung von Nichteisenmetall aus Schrottmetallgegenständen und Tunnelofenvorrichtung zur Durchführung des Verfahrens**
Extraction of non-ferrous metal from metal scrap parts by liquation and tunnel furnace installation therefor
Récupération de métaux non ferreux par liquation de déchets métalliques et installation à four-tunnel pour sa mise en oeuvre

(30) Priorität: 03.04.1997 DE 19713734
(43) Veröffentlichungstag der Anmeldung: 07.10.1998
(73) Patentinhaber: Jansen, Wolfgang, 41460 Neuss (DE)
(72) Erfinder: Jansen, Wolfgang, 41460 Neuss (DE)
(74) Vertreter: Paul, Dieter-Alfred, Dipl.-Ing.

(56) Entgegenhaltungen:
- DE-A- 3 714 014
- DE-A- 4 142 107
- GB-A- 427 243
- GB-A- 1 563 706
- US-A- 1 826 755

## Beschreibung

Die Erfindung betrifft ein Verfahren zur Gewinnung von Nichteisenmetall aus Gegenständen, die aus Eisen- und Nichteisenmetall bestehen oder diese enthalten, wobei der Gegenstand auf eine Trenntemperatur aufgeheizt wird, die zwischen der Schmelztemperatur des Eisen- und des Nichteisenmetalls liegt, und wobei das geschmolzene Nichteisenmetall aufgefangen wird. Die Erfindung betrifft desweiteren eine Vorrichtung zur Gewinnung von Nichteisenmetall aus Gegenständen, die aus Eisen- und Nichteisenmetall bestehen oder diese enthalten, wobei die Vorrichtung einen Ofen zum Aufheizen des Gegenstandes auf eine zwischen den Schmelztemperaturen des Eisen- und des Nichteisenmetalls liegenden Trenntemperatur und eine Auffangeinrichtung zum Auffangen des geschmolzenen Nichteisenmetalls aufweist.

Bei der Zerlegung von Automobilen fallen teilweise großvolumige Gegenstände, beispielsweise Motorblöcke, Zylinderköpfe etc. an, die teilweise aus einem Eisenmetall, z. B. Gußeisen, und einem Nichteisenmetall, z. B. einer Aluminiumlegierung, bestehen. Auch in anderen technischen Bereichen werden Gegenstände am Ende ihrer Betriebszeit ausgesondert, die aus Eisen- und Nichteisenmetallen bestehen oder diese enthalten, wie beispielsweise gepreßte metallblanke Hochspannungskabel. Durch Recyclingverfahren ist man bemüht, solche Gegenstände soweit aufzuarbeiten, daß die einzelnen Metall getrennt voneinander wiederverwendet, beispielsweise eingeschmolzen werden können.

In der GB-A-1 563 706 sind ein Verfahren und eine Vorrichtung beschrieben, bei dem aus Eisen und Aluminium bestehende Gegenstände zunächst verschrottet und der Schrott anschließend in einem Transportwagen in einen Herdofen eingefahren wird, wo er auf eine entsprechende Trenntemperatur stationär erhitzt wird. Dabei schmilzt das Aluminium ab und wird aufgefangen. Bei diesem Verfahren ist von Nachteil, daß das Abschmelzen nicht in einem kontinuierlichen Prozeß erfolgt und deshalb viel Zeit erfordert. Außerdem entstehen beim Ein- und Ausfahren der Transportwagen hohe Wärmeverluste.

In der DE-B-24 36 549 ist ein Verfahren beschrieben, bei dem Automobilschrott zunächst in Schredderanlagen in etwa faust-große Stücke zerschlagen und danach einer mechanischen und/oder pneumatischen sowie magnetischen Sortierung unterworfen wird. Anschließend wird das Gemisch aus Eisenteilen und Nichteisenteilen kontinuierlich auf mindestens 1100°C erhitzt, wobei die in dem Gemisch enthaltenen brennbaren Nichtmetalle verbrannt werden und die Nichteisenmetalls aus dem Gemisch ausgeschmolzen und gesondert abgezogen werden. Dies geschieht in einem kontinuierlich arbeitenden Verbrennungsofen, der schräg abwärts gerichtet ist und durch den sich ein Fördermittel bewegt. Unterhalb des Fördermittels sind in Abständen mehrere Abzugsvorrichtungen für das aus dem Gemisch ausschmelzende Nichteisenmetall vorgesehen. Hinter dem Austragsende wird der so aufbereitete und gereinigte Eisenschrott zu chargierfähigen Paketen verpreßt. Die ausgesonderten Nichteisenmetalle können einer weiteren Verwertung zugeführt werden.

Bei diesem Verfahren geht es um ein Schrottgemisch, bei denen die Einzelteile des Gemischs entweder aus Eisenmetallen oder aus Nichteisenmetallen sowie aus organischen Bestandteilen bestehen. Demgemäß geht es bei dem Verfahren darum, die aus Nichteisenmetall bestehenden Teile aus dem Gemisch auszusondern, um möglichst reinen, hochwertigen Eisenschrott zu erhalten, der im Stahlwerk eingesetzt werden kann. Es handelt sich also um eine Art thermische Sortierung. Ähnlich wird nach dem aus der DE-C-42 00 963 bekannten Verfahren vorgegangen, nur daß hier ein Drehrohrofen zum Einsatz kommt.

Auch bei dem Verfahren nach der DE-A-41 42 107 kommt ein Drehrohrofen zum Einsatz. Dabei geht es hier um die Wiedergewinnung von Metallwerkstoffen aus Altmaterial, insbesondere aus Kabeln, Erdkabeln, Erdkabelschrott o. dgl. Nach einem mehrstufigen Zerreißen des Altmaterials in einer Schreddereinrichtung erfolgt die Trennung des Nichteisenvon dem Eisenmetall thermisch in dem Drehrohrofen. Das auf diese Art gewonnene Nichteisenmetall kann direkt der Wiederverwertung in der Industrie zugeführt werden.

Allen Verfahren ist gemeinsam, daß zunächst eine Zerkleinerung bzw. Verschrottung und dann teilweise sogar eine Vorsortierung durchgeführt wird. Dies ist wegen der hierfür notwendigen Anlageninvestition und Wartung aufwendig. Soweit Drehrohröfen zur Anwendung kommen, entsteht zusätzlicher Kostenaufwand, da solche Öfen in der Anschaffung und im Betrieb teuer sind.

In der US-A-1,826,755 ist eine Verfahren offenbart, bei dem Gegenstände wie beispielsweise Kühler in einem Ofen von niedrigschmelzenden Metallen wie Lötzinn durch Abschmelzen befreit werden. Dabei werden die Kühler über Kettenförderer durch einen Ofenraum geführt, durch die extern erzeugte Rauchgase zirkulieren. Zwei Kettenförderer sind so angeordnet, daß bei der Übergabe von dem ersten auf den zweiten Kettenförderer ein Umdrehen der Gegenstände bewirkt wird. Die Abkühlung der Gegenstände erfolgt in einem Wasserbad, so daß eine Abwärmenutzung in der Kühlzone nicht stattfindet.

Daneben sind auf dem Gebiet der Keramikherstellung schon seit langem Tunnelöfen bekannt, bei denen die Keramikteile oder Keramikmassen mittels Transportwagen durch eine Aufheizzone, eine Brennzone und eine Kühlzone transportiert werden (vgl. DE-A 37 14 014). Dabei ist es auch bekannt, die Rauchgase aus der Brennzone mit Frischluft zu vermischen und auf das Keramikbrenngut in der Aufheizzone zu blasen.

Der Erfindung liegt die Aufgabe zugrunde, ein Verfahren bereitzustellen, mit dem aus Gegenständen, die aus Eisen- und Nichteisenmetall - auch hochschmelzendem Nichteisenmetall wie Aluminium - bestehen oder diese enthalten, das Nichteisenmetall wesentlich kostengünstiger und damit wirtschaftlicher gewonnen werden kann. Eine zweite Aufgabe besteht darin, eine möglichst einfache Vorrichtung zur Durchführung dieses Verfahrens bereitzustellen.

Der erste Teil der Aufgabe wird erfindungsgemäß dadurch gelöst, daß die Gegenstände mittels einer Vielzahl hintereinander aufgereihter Transportwagen mit Transportbehältern fortlaufend durch einen Tunnelofen mit in Transportrichtung gesehen hintereinander angeordneter Aufheizzone, Schmelzzone mit Heizeinrichtung und Kühlzone transportiert wird, wobei die Gegenstände in der Aufheizzone mit dem in der Schmelzzone erzeugten Rauchgas und/oder mit abgeführter Wärme aus der Kühlzone vorgeheizt und in der Schmelzzone auf Trenntemperatur erhitzt werden. Grundgedanke der Erfindung ist es somit, bei den oben genannten Gegenständen die Trennung der Metalle in einem Tunnelofen vorzunehmen, durch den die Gegenstände fortlaufend vom Eingang bis zum Ausgang mittels Transportwagen transportiert werden. Überraschenderweise hat sich gezeigt, daß das Abschmelzen auch hochschmelzender Nichteisenmetalle wie Aluminium problemlos und mit hohem Durchsatz gelingt, obwohl der Gegenstand unzerkleinert vorliegt und die Temperatur auf Werte beschränkt wird, bei denen das zu gewinnende Nichteisenmetall nicht beeinträchtigt wird, also beispielsweise nicht verbrennt. Das Verfahren eignet sich zudem zur Reinigung von Werkzeugen oder dgl., an denen Nichteisenmetall anhaftet.

Der Transport durch den Tunnelofen kann in stetiger Bewegung erfolgen, aber auch intermittierend, also quasikontinuierlich.

In weiterer Ausbildung der Erfindung ist vorgesehen, daß das geschmolzene Nichteisenmetall in Auffangbehältnissen, z. B. Kokillen, aufgefangen wird, die mit dem betreffenden Gegenstand mittransportiert werden. Auf diese Weise wird das geschmolzene Nichteisenmetall zusammen mit dem Gegenstand aus dem normalen Ausgang des Tunnelofens herausgeführt und kann dort entnommen werden. Alternativ dazu ist vorgesehen, daß das geschmolzene Nichteisenmetall in einer Auffangrinne aufgefangen wird. Über diese kann das Nichteisenmetall aus dem Tunnelofen herausgeführt werden. Vorzugsweise sollte das geschmolzene Nichteisenmetall in Kokillen abgegossen werden, so daß es dann in für den Transport geeigneter Form anfällt.

Die Verweilzeit der Gegenstände im Tunnelofen sollte so sein, daß der abzuschmelzende Werkstoff möglichst vollständig von dem Gegenstand abgetrennt wird. Eine Verweilzeit von bis zu 6 Stunden hat sich als zweckmäßig erwiesen.

Um die Effizienz der Aufheizung der Gegenstände zu erhöhen, sollten die in den Tunnelofen transportierten Gegenstände mit dem im Tunnelofen ohnehin anfallenden Rauchgas aufgeheizt werden. Nach der Trennung sollten die verbliebenen Gegenstände und das geschmolzene Nichteisenmetall luftgekühlt werden, wobei die auf diese Weise erwärmte Kühlluft ebenfalls zur Aufheizung der in den Tunnelofen eintransportierten Gegenstände herangezogen werden kann.

Der zweite Teil der Aufgabe wird erfindungsgemäß durch eine Vorrichtung gelöst, bei der der Ofen als Tunnelofen ausgebildet ist, der eine Vielzahl hintereinander aufgereihter Transportwagen mit Transportbehältern aufweist, und daß der Tunnelofen in Transportrichtung hintereinander eine Aufheizzone, eine Schmelzzone mit Heizeinrichtung und eine Kühlzone aufweist, wobei eine Rauchgasrückführeinrichtung zur Rückführung der in der Schmelzzone entstehenden Rauchgase in die Aufheizzone vorgesehen ist und/oder wobei die Kühlzone mit einem Kühlgebläse und eine Kühlluftrückführeinrichtung zum Transport der aufgewärmten Kühlluft in die Aufheizzone vorgesehen ist. Diese Vorrichtung hat den Vorteil, daß das Schmelzen der Gegenstände besonders wirtschaftlich durchgeführt werden kann.

In Ausbildung der Vorrichtung ist vorgesehen, daß die Transportwagen auf Schienen verfahrbar sind, welche den Tunnelofen durchsetzen. Der Antrieb der Transportwagen innerhalb des Tunnelofens kann über eine geeignete Ofentransporteinrichtung geschehen. Zusätzlich kann im Bereich des Eingangs des Tunnelofens eine Schubeinrichtung zum Verschieben der Transportwagen in Transportrichtung vorgesehen sein.

In weiterer Ausgestaltung der Erfindung ist vorgesehen, daß jeder Transportbehälter einen geneigten Boden aufweist, der in wenigstens einer Gießöffnung oberhalb der Auffangeinrichtung ausläuft. Beispielsweise kann der Boden V-förmig geneigte Flächen aufweisen. Zur Wärmeisolierung zwischen Transportbehälter und dem Fahrwerk des Transportwagens sollten keramische Abstützelemente vorgesehen sein, auf denen der Transportbehälter ruht.

Die Auffangeinrichtung kann beispielsweise aus Auffangbehältnissen bestehen, die unterhalb der Transportbehälter angeordnet und mit diesen mitgeführt werden. Alternativ dazu ist vorgeschlagen, daß die Auf fangeinrichtung als Auffangrinne ausgebildet ist, welche sich in Längsrichtung des Tunnelofens erstreckt. Zweckmäßigerweise mündet die Auffangrinne in einer Kokillengießeinrichtung. Sie kann eine umlaufende Fördereinrichtung mit darin hintereinander angeordneten Kokillen aufweisen. Die Kokillengießeinrichtung ist zweckmäßigerweise außerhalb des Tunnelofens angeordnet.

Nach der Erfindung ist ferner vorgesehen, daß zwischen Aufheizzone und Schmelzzone zusätzlich eine Vorwärmzone angeordnet ist.

Die Kühlzone ist zweckmäßigerweise mit einem Kühlgebläse versehen, über das der aufgeheizte Transportwagen und dem übriggebliebenen Restgegenstand aus dem Eisenmetall, ggf. zusammen mit dem geschmolzenen Nichteisenmetall, abgekühlt werden kann. Die hierdurch aufgewärmte Kühlluft sollte der Kühlluftrückführeinrichtung zugeführt werden, um sie in die Aufheizzone zu transportieren, wo sie zur Aufheizung der in den Tunnelofen eingefahrenen Gegenstände dient.

Nach der Erfindung ist ferner vorgeschlagen, daß hinter dem Tunnelofen eine Hubeinrichtung mit einem Elektromagneten zum Anheben des Restgegenstands von der Transporteinrichtung angeordnet ist. Zusätzlich sollte eine Absaugeinrichtung zum Absaugen von bei dem Schmelzprozeß übriggebliebenen Staubrückständen vorgesehen sein.

Als besonders geeignete Wärmequelle haben sich Erdgasbrenner erwiesen, die in der Schmelzzone in geeigneter Anzahl angeordnet werden sollten.

Der Tunnelofen sollte zweckmäßigerweise mit einem Abgaskamin versehen sein, über den die Abgase abgeführt werden können. Dem Abgaskamin können ein Staubfilter und/oder eine Fluorkaskade zugeordnet sein, um den Schadstoffausstoß gering zu halten.

In der Zeichnung ist die Erfindung anhand eines schematisch dargestellten Ausführungsbeispiels näher erläutert. Es zeigen:
- Figur 1: einen Tunnelofen in der Schrägansicht;
- Figur 2: einen Transportwagen für den Tunnelofen gemäß Figur 1 in vergrößerter Darstellung und
- Figur 3: einen weiteren Tunnelofen in Schrägansicht, im Mittenbereich aufgeschnitten.

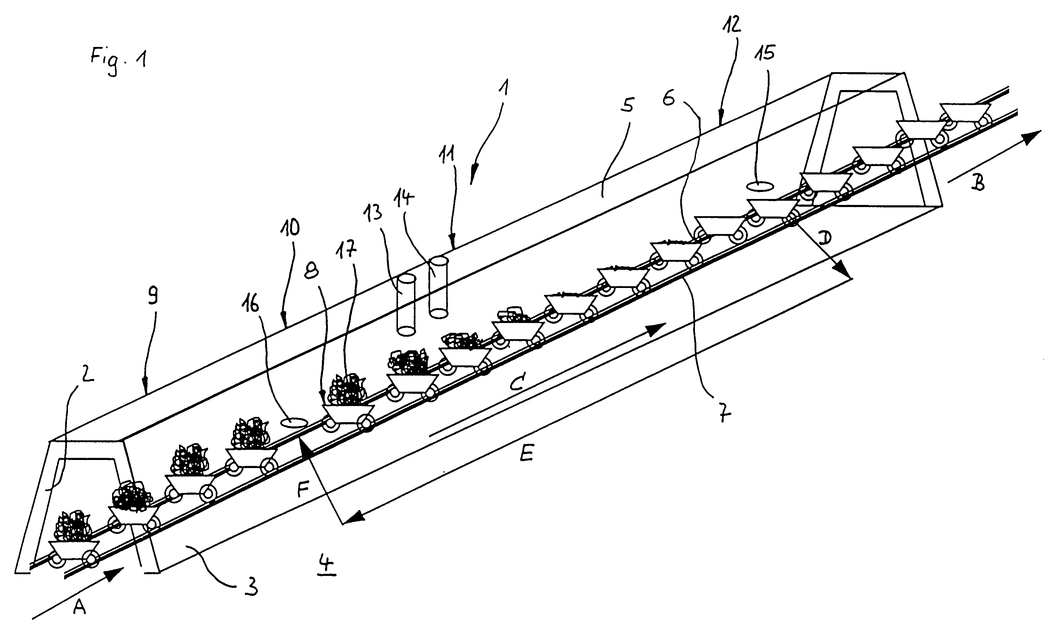

Der in Figur 1 gezeigte Tunnelofen 1 - er ist in einer nicht dargestellten Tunnelofenhalle angeordnet - weist zwei Ofenseitenwände 2, 3 auf, die auf einem Boden 4 aufstehen und nach oben hin schräg gegeneinander geneigt sind. Obenseitig werden die Ofenseitenwände 2, 3 durch eine Deckenwand 5 verbunden, so daß sich ein trapezförmiger freier Querschnitt des Tunnelofens 1 ergibt. Sowohl die Ofenseitenwände 2, 3 als auch die Deckenwand 5 sind gemauert und innenseitig mit feuerfestem Material ausgekleidet.

Eingangsseitig weist der Tunnelofen 1 ein hier nicht näher dargestelltes Ofenhubtor auf, mit dem der Eingang des Tunnelofens 1 geschlossen oder geöffnet werden kann. Ausgangsseitig ist der Tunnelofen 1 offen ausgebildet.

Auf den Boden 4 aufgesetzt sind zwei parallel zueinander durch den Tunnelofen 1 gehende Schienen 6, 7, welche sich eingangs- wie ausgangsseitig nach außen über den Tunnelofen 1 hinaus erstrecken. Auf den Schienen 6, 7 sind hintereinander eine Vielzahl von Transportwagen - beispielhaft mit 8 bezeichnet - in Richtung der Schienen 6, 7 verfahrbar. Die Transportwagen 8 liegen stirnseitig aneinander an. Über eine hier nicht näher dargestellte Ofentransporteinrichtung innerhalb des Tunnelofens 1 werden die Transportwagen 8 taktweise in Transportrichtung (Pfeile A, B und C) geschoben. Sobald sich hinter dem Ofenhubtor am Eingang des Tunnelofens 1 eine für einen Transportwagen 8 ausreichende Lücke ergibt, wird das Ofenhubtor geöffnet, und es wird ein weiterer Transportwagen 8 mit Hilfe einer hier nicht näher dargestellten hydraulischen Einschubeinrichtung in den Tunnelofen 1 eingeschoben. Anschließend wird das Ofenhubtor wieder geschlossen.

Der Tunnelofen 1 ist in vier ineinander übergehende Zonen aufgeteilt, nämlich - in Transportrichtung gesehen - in eine Aufheizzone 9, eine Vorwärmzone 10, eine Schmelzzone 11 und eine Kühlzone 12. In der Schmelzzone 11 sind vier zündgesicherte, erdgasbetriebene Seitenbrenner angeordnet, von denen hier nur zwei Seitenbrenner 13, 14 schematisch dargestellt sind. Zusätzlich sind acht kleinere Seitenbrenner vorgesehen, die hier nicht zu sehen sind. Außerdem ist die Schmelzzone 11 mit einer zentralen Verbrennungsluftversorgung ausgerüstet. Sie ist so ausgebildet, daß die bei der Verbrennung des Erdgases entstehenden Rauchgase im Tunnelofen 1 entgegen der Transportrichtung (Pfeile A, B und C) bis in die Aufheizzone 9 strömen. Auf diese Weise werden auch schon in der Aufheizzone 9 und der Vorwärmzone 10 hohe Temperaturen erzeugt. Die Temperatur in der Schmelzzone 11 beträgt maximal 800°C. Dabei sorgen die Seitenbrenner 13, 14 für eine durch den Sauerstoffverbrauch ihrer Flammen sauerstoffarme Atmosphäre, wodurch die Oxidation des Nichteisenmetalls weitgehend vermieden wird.

In der Kühlzone 12 wird über ein hier nicht dargestelltes Kühlgebläse und eine Kühlöffnung 15 Außenluft über die Transportwagen 8 geleitet. Hierdurch werden die Transportwagen 8 abgekühlt. Dabei heizt sich die Kühlluft derart auf, daß sie für die Vorwärmung im Bereich der Aufheizzone 9 und der Vorwärmzone 10 verwendet werden kann. Die entsprechende Luftführung ist durch die Pfeile D, E und F versinnbildlicht. Über die Eintrittsöffnung 16 gelangt die aufgewärmte Kühlluft in die Vorwärmzone 10. Statt der gezeigten Lösung kann die Kühlluft auch in die Aufheizzone 9 nahe des Eingangs des Tunnelofens 1 eingeführt werden.

Am Beginn der Aufwärmzone 9 nahe des Ofenhubtors befindet sich eine nicht dargestellte Rauchgasöffnung. Über diese Rauchgasöffnung wird das Rauchgas in einen Kamin geleitet. Dort wird es mittels eines Gewebefilters und einer Fluorkaskade gereinigt und verläßt dann den Kamin.

In den Transportwagen 8 befindet sich bei dem gezeigten Ausführungsbeispiel jeweils nur ein schematisch skizzierter Gegenstand, beispielhaft mit 17 bezeichnet, der teilweise aus Gußeisen und teilweise aus einer Aluminiumlegierung besteht. Typisches Beispiel ist ein Motorblock aus Grauguß mit Aluminiumzylinderkopf. Zuvor ist der Gegenstand 17 durch Flurförderfahrzeuge an einem Lagerort aufgenommen, in die hier nicht dargestellte Halle transportiert und dort in die Transportwagen 8 eingesetzt worden. In der Aufheizzone 9 und auch in der Vorwärmzone 10 wird der Gegenstand 17 durch die im Gegenstrom geführten Rauchgase aus der Schmelzzone 11 und die erwärmte Kühlluft aus der Kühlzone 12 vor- und aufgewärmt. In diesen Zonen 10, 11 wird die Schmelztemperatur des Aluminiumanteils des Gegenstands 17 noch nicht erreicht.

In der Schmelzzone 11 liegt die Temperatur oberhalb des Schmelzpunkts des Aluminiumanteils. Der Aluminiumanteil schmilzt, wobei die Aluminiumschmelze in Kokillen aufgefangen wird.

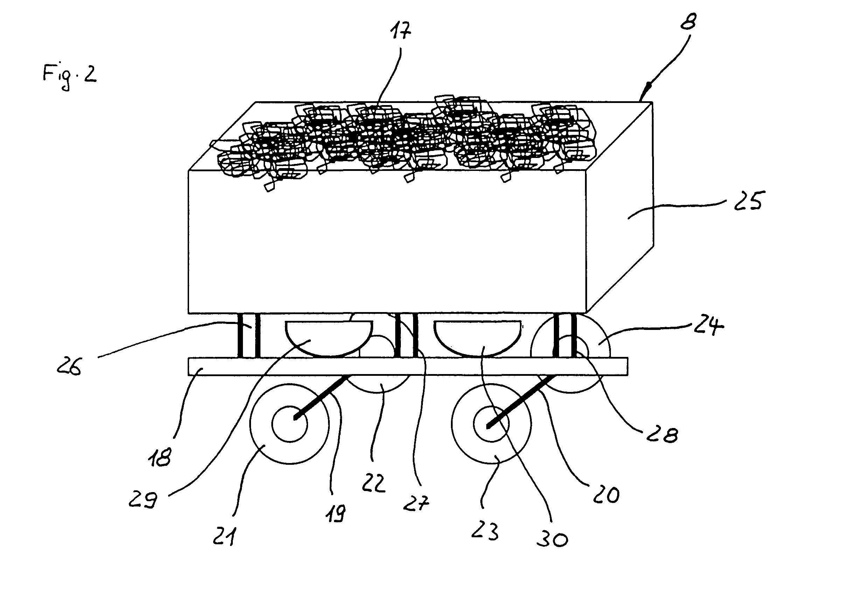

In Figur 2 ist einer der Transportwagen 8 näher dargestellt. Er hat einen rechteckigen Fahrgestellrahmen 18, der auf zwei in Transportrichtung hintereinander angeordneten Achsen 19, 20 ruht, welche endseitig jeweils ein Rad 21, 22, 23, 24 tragen. Oberhalb des Fahrgestellrahmens 18 ist ein Transportbehälter 25 angeordnet, der obenseitig offen ist. Er stützt sich über wärmeisolierende Blähtonsteine 26, 27, 28 auf dem Fahrgestellrahmen 18 ab. In dem freien Zwischenraum zwischen Transportbehälter 25 und Fahrgestellrahmen 18 sind zwei becherförmige Kokillen 29, 30 angeordnet. Oberhalb dieser Kokillen 29, 30 weist der Boden des Transportbehälters 25 jeweils eine hier nicht sichtbare Gießöffnung auf. Der Boden des Transportbehälters 25 ist zweigeteilt, wobei jeder Teil so geneigt ist, daß der Aluminiumanteil des Gegenstands 17 vollständig in die Kokillen 29, 30 abfließt. Die Eisen- oder Stahlbestandteile des Gegenstands 17 bleiben auf dem Boden des Transportbehälters 25 zurück, da ihr Schmelzpunkt höher liegt als die Maximaltemperatur in der Schmelzzone 11. Dies gilt auch für das beim Schmelzen gebildete Aluminiumoxid.

Die Transportwagen 8 passieren nach der Schmelzzone 11 die Kühlzone 12. Dort werden die Transportwagen 8 mit Außenluft beaufschlagt und hierdurch samt mittransportiertem Inhalt, nämlich Eisen- und Stahlbestandteile, Aluminiumoxid und Aluminiummasseln, abgekühlt.

Außerhalb des Tunnelofens 1 befindet sich eine hier nicht dargestellte Hubeinrichtung mit einem Elektromagneten. Durch diesen wird der Restgegenstand aus dem Transportbehälter 25 herausgehoben und in einem Container für Fe-Schrott gesammelt. Mittels eines ebenfalls nicht dargestellten Staubsaugers wird das Aluminiumoxid aus dem Transportbehälter 25 abgesaugt. Es kann beispielsweise als Zuschlagstoff zur Tonaufbereitung bei der Herstellung von Hintermauerziegeln verwendet werden.

Die Kokillen 29, 30 werden zusammen mit den inzwischen verfestigten Aluminiummasseln mittels Gabelstaplern von den Transportwagen 8 abgehoben. Die Aluminiummasseln werden ausgekippt, und die Kokillen 29, 30 wieder auf den jeweiligen Transportwagen 8 gestellt. Die Transportwagen 8 werden anschließend wieder zur Eingangsseite des Tunnelofens 1 befördert, damit sie dort erneut mit Schmelzgut beladen und dem Tunnelofen 1 zugeführt werden können.

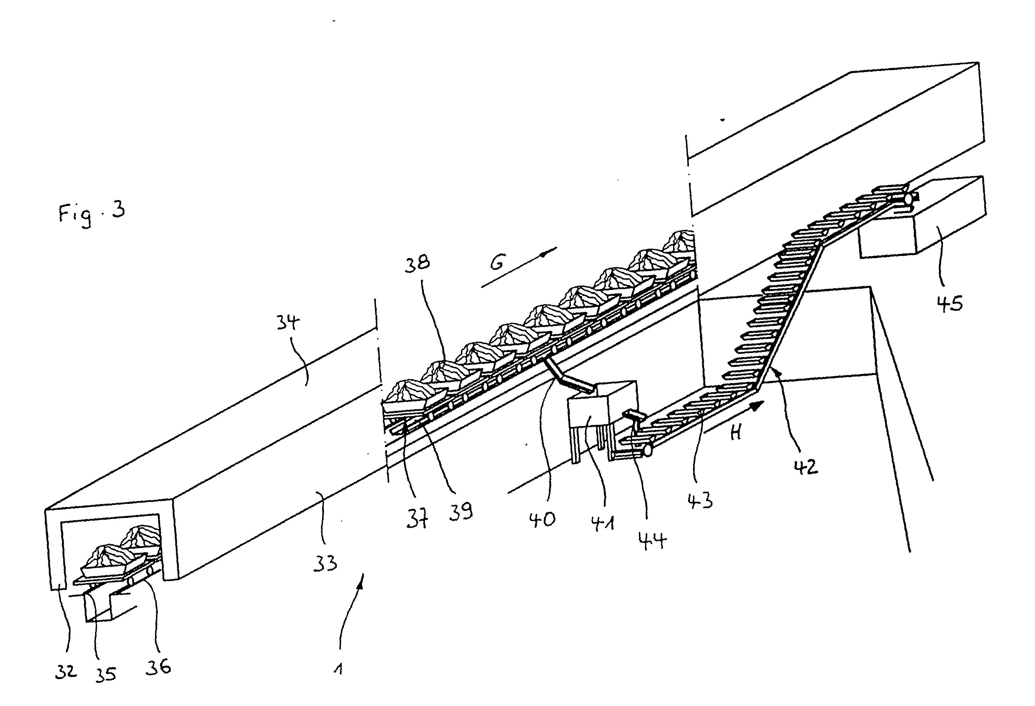

Der in Figur 3 gezeigte Tunnelofen 31 ist ähnlich aufgebaut wie der Tunnelofen 1 gemäß Figur 1 und weist deshalb zwei Ofenseitenwände 32, 33 auf, die obenseitig durch eine Dekkenwand 34 verbunden sind, so daß sich ein rechteckiger freier Querschnitt ergibt. Eingangsseitig weist der Tunnelofen 31 ein hier nicht näher dargestelltes Ofenhubtor auf, mit dem der Eingang des Tunnelofens 21 geschlossen oder geöffnet werden kann. Ausgangsseitig ist der Tunnelofen 31 offen ausgebildet.

Auf den Boden aufgesetzt sind zwei parallel zueinander durch den Tunnelofen 31 gehende Schienen 35, 36, welche sich eingangs- und ausgangsseitig nach außen über den Tunnelofen 21 hinaus erstrecken. Auf den Schienen 35, 36 sind hintereinander eine Vielzahl von Transportwagen - beispielhaft mit 37 bezeichnet - in Richtung der Schienen 35, 36 verfahrbar. Sie liegen stirnseitig aneinander an und sind mit Gegenständen, beispielhaft mit 38 bezeichnet, beladen, welche teilweise aus einem Eisen- und teilweise aus einem Nichteisenmetall bestehen. Über eine hier nicht näher dargestellte Ofentransporteinrichtung werden die Transportwagen 37 taktweise in Transportrichtung (Pfeil G) verschoben.

Der Tunnelofen 31 ist auch hier in vier ineinander übergehende Zonen aufgeteilt. Zur Beschreibung dieser Zonen sowie der Beheizung und Luftführung wird auf die Beschreibung des Tunnelofens 1 Bezug genommen, da der Tunnelofen 31 insoweit gleich aufgebaut ist. Im Folgenden werden lediglich die Abweichungen zu dem Tunnelofen 1 beschrieben.

Bei dem Transportwagen 37 wird das abschmelzende Nichteisenmetall nicht - wie bei dem Tunnelofen 1 gemäß den Figuren 1 und 2 - in mitgeführten Kokillen aufgefangen, sondern in einer stationären Auffangrinne 39, welche sich zwischen den Schienen 35, 36 unterhalb der Transportwagen 37 über den Bereich der Schmelzzone erstreckt. Die Auffangrinne 39 ist beidseitig zu einer quer abgehenden Auslaßrinne 40 geneigt, so daß das in der Auffangrinne 39 aufgefangene Nichteisenmetall in die Auslaßrinne 40 fließt. Über die Auslaßrinne 40 wird das abgeschmolzene Nichteisenmetall in einen Bereich außerhalb des Tunnelofens 31 geführt. Dort fließt es in einen Speicherbehälter 41, der so beheizt ist, daß das einfließende Nichteisenmetall flüssig gehalten wird.

An dem Speicherbehälter 41 vorbei läuft eine umlaufende Transporteinrichtung 42, die eine Vielzahl von sich quer erstreckenden Kokillen - beispielhaft mit 43 bezeichnet - mit sich führt. Das Obertrum der Transporteinrichtung 42 läuft in Richtung des Pfeils H. Das Untertrum ist nicht eingezeichnet. Die Transporteinrichtung 42 wird so gesteuert, daß es jeweils angehalten wird, wenn sich eine leere Kokille 43 unterhalb eines Auslaßrohres 44 des Speicherbehälters 41 befindet. Der Auslaß des Speicherbehälters 41 wird dann solange geöffnet, bis die jeweilige Kokille 43 gefüllt ist. Dann wird die Transporteinrichtung 42 um den Mittenabstand zwischen zwei benachbarten Kokillen 43 in Richtung des Pfeils H bewegt.

Auf dem Weg zum oberen Umlenkpunkt der Transporteinrichtung 42 kühlt sich das Nichteisenmetall in den Kokillen 43 ab und schrumpft dabei. Beim Umlenken am oberen Ende der Transporteinrichtung 42 fällt das Nichteisenmetall heraus und wird dort von einer Auffangeinrichtung 45 aufgenommen. Es kann dann an einen geeigneten Ort mit üblichen Transportmitteln bewegt werden.

## Patentansprüche

1. Verfahren zur Gewinnung von Nichteisenmetall bei Gegenständen (17, 38), die aus Eisen- und Nichteisenmetallen bestehen oder diese enthalten, wobei die Gegenstände (17, 38) ohne vorherige Zerkleinerung durch einen Ofen transportiert und auf eine Trenntemperatur aufgeheizt werden, die zwischen der Schmelztemperatur des Eisen- und des Nichteisenmetalls liegt, und wobei dann das geschmolzene Nichteisenmetall aufgefangen und aus dem Ofen (1, 31) herausgeführt wird, **dadurch gekennzeichnet**, **daß** die Gegenstände (17, 38) mittels einer Vielzahl hintereinander aufgereihter Transportwagen (8, 37) mit Transportbehältern (25) fortlaufend durch einen Tunnelofen (1, 31) mit in Transportrichtung (Pfeile A, B, C, G) gesehen hintereinander angeordneter Aufheizzone (9), Schmelzzone (11) mit Heizeinrichtung (13, 14) und Kühlzone transportiert werden, wobei die Gegenstände (17, 38) in der Aufheizzone (9) mit dem in der Schmelzzone (11) erzeugten Rauchgas und/oder mit abgeführter Wärme aus der Kühlzone (12) vorgeheizt und in der Schmelzzone (11) auf Trenntemperatur erhitzt werden.

2. Verfahren nach Anspruch 1, **dadurch gekennzeichnet, daß** der Transport im Tunnelofen (1, 31) intermittierend erfolgt.

3. Verfahren nach Anspruch 1 oder 2, **dadurch gekennzeichnet, daß** das geschmolzene Nichteisenmetall in Auffangbehältnissen (29, 30) aufgefangen wird, die mit den betreffenden Gegenständen (17) mittransport werden.

4. Verfahren nach Anspruch 1 oder 2, **dadurch gekennzeichnet, daß** das geschmolzene Nichteisenmetall in einer Auffangrinne (39) aufgefangen wird.

5. Verfahren nach einem der Ansprüche 1 bis 4, **dadurch gekennzeichnet, daß** das geschmolzene Nichteisenmetall in Kokillen (29, 39, 41) abgegossen wird.

6. Verfahren nach einem der Ansprüche 1 bis 5, **dadurch gekennzeichnet, daß** die Verweilzeit im Tunnelofen (1, 31) bis zu sechs Stunden beträgt.

7. Verfahren nach einem der Ansprüche 1 bis 6, **dadurch gekennzeichnet, daß** der verbliebene Gegenstand (17, 38) und das geschmolzene Nichteisenmetall luftgekühlt werden.

8. Verfahren nach Anspruch 7, **dadurch gekennzeichnet, daß** die in den Tunnelofen (1, 31) eintransportierten Gegenstände (17, 38) mit der erwärmten Kühlluft aufgeheizt werden.

9. Vorrichtung zur Gewinnung von Nichteisenmetallen bei Gegenständen (17, 38), die aus Eisen- und Nichteisenmetallen bestehen oder diese enthalten, wobei die Vorrichtung einen Ofen (1, 31) zum Aufheizen der Gegenstände (17, 38) auf eine zwischen den Schmelztemperaturen des Eisen- und des Nichteisenmetalls liegenden Trenntemperatur und eine Auffangeinrichtung (29, 30) zum Auffangen des geschmolzenen Nichteisenmetalls aufweist, wobei der Ofen von einer Transporteinrichtung (6, 7, 8, 35, 36, 37) zum Transport der Gegenstände (17, 38) durch den Tunnelofen (1, 31) durchsetzt ist, **dadurch gekennzeichnet**, **daß** der Ofen als Tunnelofen (1, 31) ausgebildet ist, welcher eine Vielzahl hintereinander aufgereihter Transportwagen (8, 35) mit Transportbehältern (25) aufweist, und daß der Tunnelofen (1, 31) in Transportrichtung (Pfeile A, B, C, G) hintereinander eine Aufheizzone (9), eine Schmelzzone (11) mit Heizeinrichtung (13, 14) und eine Kühlzone (12) aufweist, wobei eine Rauchgasrückführeinrichtung zur Rückführung der in der Schmelzzone (11) entstehenden Rauchgase in die Aufheizzone (9) vorgesehen ist und/oder wobei die Kühlzone (12) mit einem Kühlgebläse und eine Kühlluftrückführeinrichtung zum Transport der aufgewärmten Kühlluft in die Aufheizzone (9) vorgesehen ist.

10. Vorrichtung nach Anspruch 9, **dadurch gekennzeichnet, daß** die Transportwagen (8, 37) auf Schienen (6, 7, 35, 36) verfahrbar sind, welche den Tunnelofen (1, 31) durchsetzen.

11. Vorrichtung nach Anspruch 9 oder 10, **dadurch gekennzeichnet, daß** im Bereich des Eingangs des Tunnelofens (1, 31) eine Schubeinrichtung zum Verschieben der Transportwagen (8, 27) in Transportrichtung (Pfeile A, B, C, G) vorgesehen ist.

12. Vorrichtung nach einem der Ansprüche 9 bis 11, **dadurch gekennzeichnet, daß** jeder Transportbehälter (25) einen geneigten Boden aufweist, der in wenigstens einer Gießöffnung oberhalb jeweils der Auffangeinrichtung (29, 30, 39) ausläuft.

13. Vorrichtung nach Anspruch 12, **dadurch gekennzeichnet, daß** der Boden V-förmig geneigte Flächen aufweist.

14. Vorrichtung nach einem der Ansprüche 9 bis 13, **dadurch gekennzeichnet, daß** der Transportbehälter (25) auf keramischen Abstützelementen (25, 26, 27, 28) ruht.

15. Vorrichtung nach einem der Ansprüche 12 bis 14, **dadurch gekennzeichnet, daß** die Auffangeinrichtung aus Auffangbehältnissen (29, 30) besteht, die unterhalb der Transportbehälter (25) angeordnet und mit diesen mitgeführt werden.

16. Vorrichtung nach einem der Ansprüche 9 bis 14, **dadurch gekennzeichnet, daß** die Auffangeinrichtung als Auffangrinne (39) ausgebildet ist, welche sich in Längsrichtung des Tunnelofens (31) erstreckt.

17. Vorrichtung nach Anspruch 16, **dadurch gekennzeichnet, daß** die Auffangrinne (39) in eine Kokillengießeinrichtung (31, 32, 33, 34, 35) mündet.

18. Vorrichtung nach Anspruch 17, **dadurch gekennzeichnet, daß** die Kokillengießeinrichtung eine umlaufende Fördereinrichtung (42) mit daran hintereinander angeordneten Kokillen (43) ausgebildet ist.

19. Vorrichtung nach einem der Ansprüche 9 bis 18, **dadurch gekennzeichnet, daß** zwischen Aufheizzone (9) und Schmelzzone (11) eine Vorwärmzone (10) angeordnet ist.

20. Vorrichtung nach einem der Ansprüche 9 bis 19, **dadurch gekennzeichnet, daß** hinter dem Tunnelofen (1, 31) eine Hubeinrichtung mit einem Elektromagneten zum Abheben des Restgegenstands von der Transporteinrichtung (8) angeordnet ist.

21. Vorrichtung nach einem der Ansprüche 9 bis 20, **dadurch gekennzeichnet, daß** hinter dem Tunnelofen (1, 31) eine Absaugeinrichtung zum Absaugen der Transporteinrichtung (8) vorgesehen ist.

22. Vorrichtung nach einem der Ansprüche 9 bis 21, **dadurch gekennzeichnet**, **daß** in der Schmelzzone (11) Erdgasbrenner (13, 14) angeordnet ist.

23. Vorrichtung nach einem der Ansprüche 9 bis 22, **dadurch gekennzeichnet**, **daß** ein Abgaskamin vorgesehen ist.

24. Vorrichtung nach Anspruch 23, **dadurch gekennzeichnet, daß** dem Abgaskamin ein Staubfilter zugeordnet ist.

25. Vorrichtung nach Anspruch 23 oder 24, **dadurch gekennzeichnet, daß** dem Abgaskamin eine Fluorkaskade zugeordnet ist.

## Claims

1. Process for recovering non-ferrous metal from objects (17, 38) composed of or containing ferrous and non-ferrous metals, and the objects (17, 38) are without prior reduction transported through a furnace and heated to a separating temperature which lies between the melt temperature of the ferrous and the non-ferrous metal, and the melted non-ferrous metal is than collected and ducted out of the furnace (1, 31), **characterised in that** the objects (17, 38) are continuously transported by means of a plurality of successively lined up transport carriages (8, 37) with transport containers (25) through a tunnel furnace (1, 31) comprising a heating zone (9), a melting zone (11) with heating device (13, 14) and a cooling zone, arranged one behind the other as seen in the transport direction (arrows A, B, C, G), and the objects (17, 38) are preheated in the heating zone (9) by means of flue gas produced in the melt zone (11) and/or heat discharged from the cooling zone (12) and in the melting zone (11) heated to separating temperature.

2. Process according to Claim 1, **characterised in that** the transport in the tunnel furnace (1, 31) is intermittent.

3. Process according to Claim 1 or 2, **characterised in hat** the melted non-ferrous metal is collected in containers (29, 30) which are transported along with subject objects (17).

4. Process according to Claim 1 or 2, **characterised in that** the melted non-ferrous metal is collected in a collection channel (39).

5. Process according to one of Claims 1 to 4, **characterised in that** the melted non-ferrous metal is cast in moulds (29, 39, 41).

6. Process according to one of Claims 1 to 5, **characterised in that** the residence time in the tunnel furnace (1, 31) is up to six hours.

7. Process according to one of Claims 1 to 6, **characterised in that** the remaining object (17, 38) and the melted non-ferrous metal are air-cooled.

8. Process according to Claim 7, **characterised in that** objects (17, 38) transported into the tunnel furnace (17, 38) are heated by heated cooling air.

9. Device for recovering non-ferrous metals from objects (17, 38) composed of or containing ferrous and non-ferrous metals, and the device comprises a furnace (1, 31) for heating the objects (17, 38) to a separating temperature between the melting temperatures of the ferrous and the non-ferrous metal and a collecting device (29, 30) for collecting melted non-ferrous metal, and the furnace is passed through by a transporting device (6, 7, 8, 35, 36, 37) for transporting the objects (17, 38) through the tunnel furnace (1, 31), **characterised in that** the furnace is designed as a tunnel furnace (1, 31) which comprises a plurality of transport carriages (8, 35) lined up one behind the other with transport containers (25), and the tunnel furnace (1, 31) comprises a heating zone (9), a melting zone (11) with heating device (13, 14) and a cooling zone (12) one behind the other in the transport direction (arrows A, B, C, G), and a flue gas feedback device for returning flue gases which develop in the melting zone (11) is provided in the heating zone (9) and/or the cooling zone (12) is provided with a cooling blower and a cooling air feedback device for transporting heated cooling air into heating zone (9).

10. Device according to Claim 9, **characterised in that** the transport carriages (8, 37) are movable on rails (6, 7, 35, 36) which pass through the tunnel furnace (1, 31).

11. Device according to Claim 9 or 10, **characterised in that** in the area of the inlet of the tunnel furnace (1, 31) is provided a pushing device for displacing the transport carriages (8, 27) in the transport direction (arrows A, B, C, G).

12. Device according to one of Claims 9 to 11, **characterised in that** each transport container (25) has a slanted bottom which terminates in at least one pouring opening above the respective collecting device (29, 30, 39).

13. Device according to Claim 12, **characterised in that** the bottom has V-shaped slanted surfaces.

14. Device according to one of claims 9 to 13, **characterised in that** the transport container (25) rests on ceramic support elements (25, 26, 27, 28).

15. Device according to one of Claims 12 to 14, **characterised in that** the collecting device is composed of collecting containers (29, 30) arranged below the transport container (25) and moved along therewith.

16. Device according to one of Claims 9 to 14, **characterised in that** the collecting device is designed as a collecting channel (39) which extends in the longitudinal direction of the tunnel furnace (31).

17. Device according to Claim 16, **characterised in that** the collecting channel (39) terminates in a mould casting device (31, 32, 33, 34, 35).

18. Device according to Claim 17, **characterised in that** the mould casting device is designed as a peripheral conveying device (42) with moulds (43) arranged thereon one behind the other.

19. Device according to one of Claims 9 to 18, **characterised in that** between heating zone (9) and melting zone (11) is arranged a pre-heating zone (10).

20. Device according to one of Claims 9 to 19, **characterised in that** behind the tunnel furnace (1, 31) is arranged a pushing device with an electro-magnet for lifting the remaining object from the transport device (8).

21. Device according to one of Claims 9 to 20, **characterised in that** behind the tunnel furnace (1, 31) is provided a vacuum device for vacuuming the transport device (8).

22. Device according to one of Claims 9 to 21, **characterised in that** natural gas burners (13, 14) are arranged in the melting zone (11).

23. Device according to one of Claims 9 to 22, **characterised in that** a waste gas glue is provided.

24. Device according to Claim 23, **characterised in that** a dust filter is associated with the waste gas flue.

25. Device according to Claim 23 or 24, **characterised in that** a fluor cascade is associated with the waste gas flue. (B-896A)

## Revendications

1. Procédé de récupération d'un métal non ferreux dans des objets (17, 38) qui consistent en des métaux ferreux et non ferreux ou renferment ces derniers, les objets (17, 38) étant transportés à travers un four, sans fragmentation préalable, et étant chauffés jusqu'à une température de séparation située entre la température de fusion du métal ferreux et du métal non ferreux, le métal non ferreux fondu étant ensuite recueilli, puis extrait du four (1, 31), caractérisé par le fait que les objets (17, 38) sont transportés en continu, au moyen d'un grand nombre de chariots de transport (8, 37) alignés en succession et munis de conteneurs de transport (25), à travers un four-tunnel (1, 31) présentant en succession, vis-à-vis de la direction du transport (flèches A, B, C, G), une zone (9) de montée en température, une zone de fusion (11) pourvue d'un dispositif de chauffage (13, 14), et une zone de refroidissement, sachant que les objets (17, 38) sont préchauffés dans la zone (9) de montée en température, par les gaz de fumées engendrés dans la zone de fusion (11) et/ou par de la chaleur dissipée provenant de la zone de refroidissement (12), et sont chauffés jusqu'à la température de séparation dans la zone de fusion (11).

2. Procédé selon la revendication 1, caractérisé par le fait que le transport s'opère de façon intermittente dans le four-tunnel (1, 31).

3. Procédé selon la revendication 1 ou 2, caractérisé par le fait que le métal non ferreux fondu est recueilli dans des réceptacles (29, 30) qui sont transportés conjointement aux objets (17) considérés.

4. Procédé selon la revendication 1 ou 2, caractérisé par le fait que le métal non ferreux fondu est recueilli dans une rigole collectrice (39).

5. Procédé selon l'une des revendications 1 à 4, caractérisé par le fait que le métal non ferreux fondu est déversé dans des coquilles (29, 39, 41).

6. Procédé selon l'une des revendications 1 à 5, caractérisé par le fait que le temps de séjour dans le four-tunnel (1, 31) dure jusqu'à six heures.

7. Procédé selon l'une des revendications 1 à 6, caractérisé par le fait que l'objet résiduel (17, 38), et le métal non ferreux fondu, sont refroidis par de l'air.

8. Procédé selon la revendication 7, caractérisé par le fait que les objets (17, 38) transférés dans le four-tunnel (1, 31) sont chauffés par l'air de refroidissement réchauffé.

9. Installation de récupération de métaux non ferreux dans des objets (17, 38) qui consistent en des métaux ferreux et non ferreux ou renferment ces derniers, l'installation comprenant un four (1, 31) pour chauffer les objets (17, 38) jusqu'à une température de séparation située entre les températures de fusion du métal ferreux et du métal non ferreux, et un dispositif collecteur (29, 30) pour recueillir le métal non ferreux fondu, le four étant parcouru par un dispositif de transport (6, 7, 8, 35, 36, 37) conçu pour transporter les objets (17, 38) à travers le four-tunnel (1, 31), caractérisée par le fait que le four est réalisé sous la forme d'un four-tunnel (1, 31) qui présente un grand nombre de chariots de transport (8, 35) alignés en succession et munis de conteneurs de transport (25) ; et par le fait que le four-tunnel (1, 31) présente, en succession dans la direction du transport (flèches A, B, C, G), une zone (9) de montée en température, une zone de fusion (11) munie d'un dispositif de chauffage (13, 14), et une zone de refroidissement (12), un dispositif de renvoi des gaz de fumées étant prévu pour renvoyer, vers la zone (9) de montée en température, les gaz de fumées engendrés dans la zone de fusion (11), et/ou la zone de refroidissement (12) étant pourvue d'une soufflerie de refroidissement et d'un dispositif de renvoi de l'air de refroidissement pour acheminer, vers la zone (9) de montée en température, l'air de refroidissement réchauffé.

10. Installation selon la revendication 9, caractérisée par le fait que les chariots de transport (8, 37) sont mobiles sur des rails (6, 7, 35, 36) parcourant le four-tunnel (1, 31).

11. Installation selon la revendication 9 ou 10, caractérisée par le fait qu'un dispositif de poussée est prévu, dans la région de l'entrée du four-tunnel (1, 31), pour pousser les chariots de transport (8, 27) dans la direction du transport (flèches A, B, C, G).

12. Installation selon l'une des revendications 9 à 11, caractérisée par le fait que chaque conteneur de transport (25) comporte un fond incliné s'achevant dans au moins un orifice de déversement, au-dessus du dispositif collecteur (29, 30, 39) respectif.

13. Installation selon la revendication 12, caractérisée par le fait que le fond possède des surfaces inclinées en forme de V.

14. Installation selon l'une des revendications 9 à 13, caractérisée par le fait que le conteneur de transport (25) repose sur des éléments céramiques d'appui (25, 26, 27, 28).

15. Installation selon l'une des revendications 12 à 14, caractérisée par le fait que le dispositif collecteur est constitué par des réceptacles (29, 30) qui sont placés au-dessous des conteneurs de transport (25), et sont guidés conjointement à ces derniers.

16. Installation selon l'une des revendications 9 à 14, caractérisée par le fait que le dispositif collecteur est réalisé sous la forme d'une rigole collectrice (39) s'étendant dans la direction longitudinale du four-tunnel (31).

17. Installation selon la revendication 16, caractérisée par le fait que la rigole collectrice (39) débouche dans un dispositif (31, 32, 33, 34, 35) de déversement dans des coquilles.

18. Installation selon la revendication 17, caractérisée par le fait que le dispositif de déversement dans des coquilles est réalisé sous la forme d'un dispositif convoyeur (42) accomplissant une révolution, sur lequel des coquilles (43) sont agencées en succession.

19. Installation selon l'une des revendications 9 à 18, caractérisée par le fait qu'une zone (10) de chauffage préalable est interposée entre la zone (9) de montée en température et la zone de fusion (11).

20. Installation selon l'une des revendications 9 à 19, caractérisée par le fait qu'un dispositif de levage muni d'un électro-aimant est placé derrière le four-tunnel (1, 31), en vue de soulever l'objet résiduel à l'écart du dispositif de transport (8).

21. Installation selon l'une des revendications 9 à 20, caractérisée par le fait qu'un dispositif d'aspiration est placé derrière le four-tunnel (1, 31), en vue d'aspirer le dispositif de transport (8).

22. Installation selon l'une des revendications 9 à 21, caractérisée par le fait que des brûleurs (13, 14) à gaz naturel sont disposés dans la zone de fusion (11).

23. Installation selon l'une des revendications 9 à 22, caractérisée par le fait qu'il est prévu une cheminée de gaz d'échappement.

24. Installation selon la revendication 23, caractérisée par le fait qu'un filtre à poussières est affecté à la cheminée de gaz d'échappement.

25. Installation selon la revendication 23 ou 24, caractérisée par le fait qu'un balayage de fluor en cascade est affecté à la cheminée de gaz d'échappement.
